Europäisches Patentamt

European Patent Office

Office européen des brevets

(19)

(11) Veröffentlichungsnummer: **0 235 717 B1**

# (12) EUROPÄISCHE PATENTSCHRIFT

(45) Veröffentlichungstag der Patentschrift: **20.02.91**

(51) Int. Cl.⁵: **A61C 9/00, A61C 19/02**

(21) Anmeldenummer: **87102533.4**

(22) Anmeldetag: **23.02.87**

(54) **Halter für zahnärztliche Abformlöffel.**

(30) Priorität: **21.02.86 DE 3605553**

(43) Veröffentlichungstag der Anmeldung:
**09.09.87 Patentblatt 87/37**

(45) Bekanntmachung des Hinweises auf die
Patenterteilung:
**20.02.91 Patentblatt 91/08**

(84) Benannte Vertragsstaaten:
**AT BE CH FR GB IT LI LU NL**

(56) Entgegenhaltungen:
**DE-U- 7 828 528**
**DE-U- 8 023 037**
**DE-U- 8 211 574**
**US-A- 3 936 937**

(73) Patentinhaber: **Adt, Karl**
**Franz-Joseph-Strasse 44**
**D-8000 München 40(DE)**

Patentinhaber: **Burkhardt, Ewald**
**Nymphenburger Strasse 209**
**D-8000 München 19(DE)**

(72) Erfinder: **Adt, Karl**
**Franz-Joseph-Strasse 44**
**D-8000 München 40(DE)**
Erfinder: **Burkhardt, Ewald**
**Nymphenburger Strasse 209**
**D-8000 München 19(DE)**

(74) Vertreter: **Antoine, Ludwig**
**Lothstrasse 1/111**
**D-8000 München 2(DE)**

## Beschreibung

Die Erfindung bezieht sich auf einen Halter für zahnärztliche Abformlöffel nach dem Oberbegriff des Patentanspruchs 1.

Bei derartigen Haltern ist es in der Praxis besonders wichtig, einerseits eine exakte Fixierung des Abformlöffels zu erreichen, und andererseits sowohl während des Einführens des Abformlöffels, seiner Fixierung und seiner Entnahme aus dem Halter jegliche Erschütterungen zu vermeiden. Selbst kleinste undefinierbare Bewegungen des Abformlöffels führen zu einer mikroskopisch kleinen Relativbewegung der verschiedenen Stellen der Abformmasse und damit als Folge zu einer erheblichen Beeinträchtigung der Qualität der mit Hilfe der Abbildung hergestellten zahntechnischen Modelle.

Es ist aus dem deutschen Gebrauchsmuster 1823073 ein zahnärztlicher Abdruckhalter für einen Abdrucklöffel bekannt, bei dem die Abdrucklöffel senkrecht in eine Öffnung des Halters einschiebbar sind. Während des Einschubvorgangs wird eine Zungenfeder durch den Stiel des Abdrucklöffels zur Seite gedrängt und bleibt stets in Anlage am Stiel des Abdrucklöffels.

Abgesehen von der senkrechten Lage des zahnärztlichen Abdrucks mit der ohnehin bestehenden Gefahr eines Abfließprozesses des Abformmaterials vom Abformlöffel wird durch die ständige Anlage der Zungenfeder am Abformlöffel gerade während des Ein- und Ausschubvorgangs eine zusätzliche relativ starke Beschleunigung des Abformlöffels hervorgerufen. Die Ursache ist in der Reibung zwischen dem Abformlöffelstiel und der Zungenfeder zu sehen. Diese Beschleunigungen führen zu einer deutlichen Erschütterung des Abformlöffels mit der Folge eines in der Regel völlig unbrauchbaren Zahn-Abdrucks.

Es ist ferner aus dem deutschen Gebrauchsmuster 7828528 ein Abdruckablagehalter für zahnärztliche Zähne- und Kiefer-Abformungen bekannt, bei dem durch ein waagerecht liegendes Klemmaul eine waagerechte Halterung eines Abformlöffels erreicht wird. Abgesehen von der freien Lage des Klemmauls und damit des Abformlöffels bereitet auch hier das Aufbringen der für die Fixierung erforderlichen Querkraft mit Hilfe des Klemmauls eine Erschütterung des Abformlöffels, da beim Schließen des Klemmauls in der Regel eine Kippbewegung des Abformlöffels mit einer anschließenden Festsetzung bei geschlossenem Klemmaul hervorgerufen wird. Auch hier ist die Qualität des zahnärztlichen Abdrucks allein bedingt durch die Funktion des Halters und in Verbindung mit dem Aufbringen und auch dem Beseitigen der für die Fixierung erforderlichen Klemmkraft erheblich beeinträchtigt.

Der Erfindung liegt die Aufgabe zugrunde, einen Halter für zahnärztliche Abformlöffel gemäß dem Oberbegriff des Patentanspruchs 1 zu schaffen, der neben einer einfachen Handhabbarkeit stets eine sichere und erschütterungsfreie Fixierung des Abformlöffels gewährleistet.

Die Erfindung löst diese Aufgabe durch die Kombination der Kennzeichenmerkmale des Patentanspruchs 1.

Weitere konstruktive Ausgestaltungen erhöhen den funktionalen Nutzen des erfindungsgemäßen Halters. So können mehrere Öffnungen in gleicher Höhe mit individuell gelagertem federnden Elementen vorgesehen werden. Dadurch lassen sich mehrere Abformlöffel mit Hilfe des Halters lagern und transportieren.

Schließlich kann eine Abdeckhaube den bzw. die eingeschobenen Abformlöffel umgeben. Dadurch ergibt sich die Möglichkeit, den Halter als Hygrophor zu nutzen. Der in der Regel in den vom Abformlöffel getragenen Abdruck eingebrachte Gips kann unter idealen, feuchten Raumbedingungen abbinden. Dadurch ergibt sich eine optimale Modellqualität, wie sie für Forschung und Praxis unabdingbar sind.

In der Zeichnung ist ein Ausführungsbeispiel der Erfindung dargestellt. Es zeigt

Fig. 1 einen Halter gemäß der Erfindung in Frontansicht

Fig. 2 eine Seitenansicht des Halters von Figur 1 und

Fig. 3 eine Daraufsicht dieses Halters.

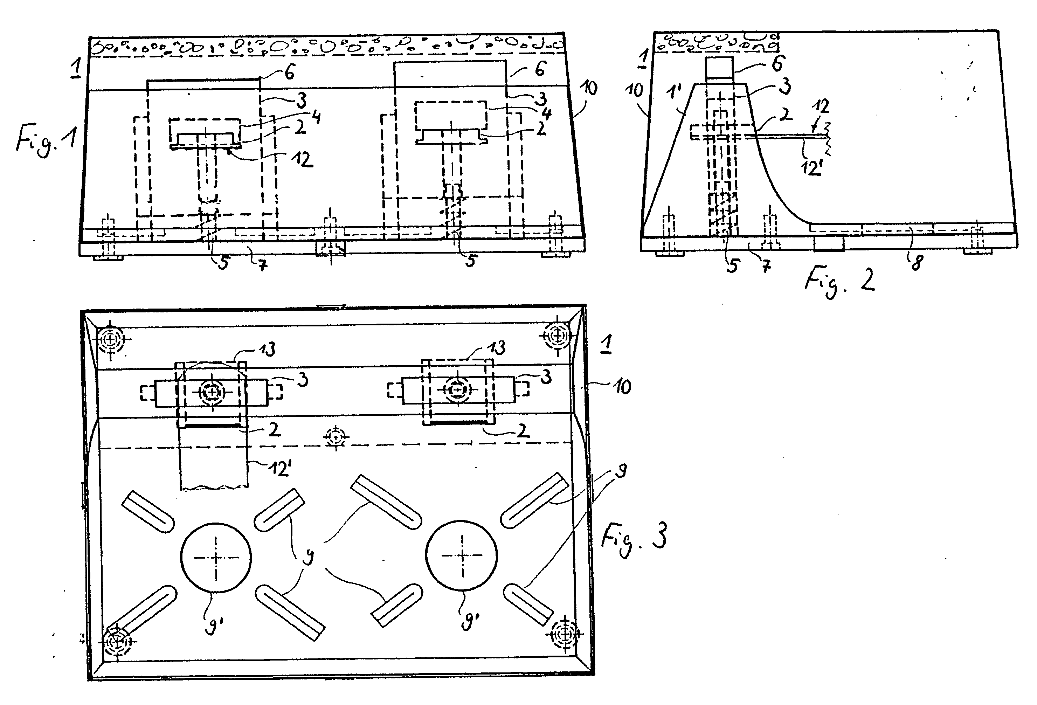

Der in den Figuren 1 bis 3 gezeigte Halter 1 für zahnärztliche Abformlöffel besitzt in gleicher Höhe zwei Öffnungen 2, hinter denen jeweils ein federnd gelagertes Element 3 angeordnet ist. Die Elemente 3 sind vertikal im Gehäuse 1' des Halters 1 verfahrbar. Sie ragen mit Endteilen 6 aus dem Gehäuse 1' heraus und besitzen Öffnungen 4, die in der im rechten Teil von Fig. 1 gezeigten Ruhestellung der Elemente 3 gegenüber dem Durchschnittsquerschnitt der Öffnungen 2 versetzt sind und bei Bewegen der Elemente 3 entgegen der Wirkung von Federn 5 diesen Durchschnittsquerschnitt freigeben. Die Federn 5 sind zwischen einer Bodenplatte 7 und den Elementen 3 angeordnet. In einem seitlich an dem Gehäuse 1' angeformten Grundkörper 8, der ebenfalls auf der Bodenplatte 7 befestigt ist, sind Kerben 9 für mit einem sogenannten Splitcast versehene Arbeitsmodelle sowie zentrale Haftplatten 9' eingearbeitet. Eine Abdeckhaube 10 umgibt die aus Gehäuse 1', Grundkörper 8 und Bodenplatte 7 bestehende Einheit.

Zum Einbringen eines nur teilweise dargestellten Abformlöffels 12 in den Halter 1 wird zunächst das Element 3 mit Hilfe seines Endteils 6 - in Fig. 1 bzw. 2 - nach unten bewegt, bis die korrespondierende Öffnung 4 die Öffnung 2 freigibt. Der Stiel des Abformlöffels 12 kann nunmehr bis zu seinem Anschlag 13 eingeschoben werden. Das Element 3 kann dann unter der Wirkung der Feder 5 in entgegengesetzter Richtung bewegt werden, bis es im Bereich seiner Öffnung 4 am Stiel 12' anliegt. Der Abformlöffel 12 ist damit durch die von der Feder 5 ausgeübte Querkraft in seiner Lage fixiert und auch bei unsachgemäße Handhabung des Halters 1 vor einem Herausfallen gesichert. Dies ist im linken Teil von Fig. 1 dargestellt.

In einem zahnärztlichen Labor kann der im Abformlöffel enthaltene Abdruck mit Gips ausgegossen werden. Hierzu ist es nicht unbedingt erforderlich, den Abformlöffel 12 aus dem Halter 1 zu entnehmen. Sollte dies jedoch erforderlich sein, so ist hierzu lediglich das Element 3 nach unten zu bewegen, bis der Stiel 12 wieder freigegeben ist. Die erneute Fixierung des Abformlöffels 12 im Halter 1 kann dann in der beschriebenen Weise erneut erfolgen.

Die Abdeckhaube 10 sorgt dafür, daß der den Abdruck ausfüllende Gips unter idealen Feuchtigkeitsbedingungen abbindet. Auch der mit einer üblichen Abformmasse und mit Gips ausgefüllte Abformlöffel 12 ist ebenfalls im Halter 1 lagefixiert und im Halter 1 sicher und erschütterungsfrei gehalten, bis der Abbindeprozeß beendet ist.

Nicht im einzelnen gezeigte Arbeitsmodelle, die mit einem sogenannten Splitcast versehen sind, lassen sich mit Hilfe der Kerben 9 und der Haftplatte 9' unter hygroskopischen Bedingungen aufbewahren und transportieren.

**Ansprüche**

1. Halter für zahnärztliche Abformlöffel, mit einem Gehäuse (1'), das mindestens eine Öffnung (2) zum Einschieben des Stiels eines Abformlöffels (12) aufweist, hinter welcher - in Einschubrichtung gesehen - ein federnd gelagertes Element (3) angeordnet ist, das nach dem Einschieben des Abformlöffels (12) in die Öffnung (2) in Anlage mit dem Stiel des Abformlöffels (12) bringbar ist, so daß es diesen mit einer Querkraft belastet, dadurch gekennzeichnet, daß
   a) die Öffnung (2) horizontal in dem Gehäuse (1') angeordnet ist,
   b) das Element (3) in dem Gehäuse (1') gegen die Kraft einer Feder (5) vertikal verfahrbar angeordnet ist,
   c) das der Feder (5) abgewandte Endteil (6) des Elements (3) aus dem Gehäuse (1') ragend angeordnet und als Handhabe ausgebildet ist, sowie
   d) das Element (3) eine quer zu seiner Längserstreckung verlaufende Öffnung (4) aufweist, die beim Bewegen des Elements (3) entgegen der Kraft der Feder (5) mit einer Öffnung (2) im Gehäuse (1') einen gemeinsamen Durchtrittsquerschnitt für den Stiel des Abformlöffels (12) freigibt, so daß mit Hilfe der Handhabe des Elements (3) eine erschütterungsfreie Fixierung des Abformbügels (12) gewährleistet ist.

2. Halter nach Anspruch 1, dadurch gekennzeichnet, daß mehrere Öffnungen (2) in gleicher Höhe und mit individuell bewegbaren federnd gelagerten Elementen (3) angeordnet sind.

3. Halter nach Anspruch 1 oder 2, gekennzeichnet durch eine Abdeckhaube (10), die den (die) eingeschobenen Abformlöffel (12) umgibt.

**Claims**

1. Support for dental impression trays with a housing (1') which has at least one opening (2) for insertion of the stem of such an impression tray (12) behind which opening - viewed from the insertion direction - a spring-mounted element (3) is laid out which - after insertion of the impression tray (12) into the opening (2) - can be brought into contact with the stem of the impression tray (12) thus loading it with a transverse force, characterized in that
   a) said opening (2) is horizontally laid out in the housing (1'),
   b) said element (3) is laid out in the housing (1') against the force of a spring (5) for vertical travel,
   c) the end part (6) of the element (3) furthest from the spring (5) is laid out protruding from the housing (1') and that said end part is designed as a handle, as well as
   d) said element (3) has an opening (4) running crosswise to its longitudinal extension which opening enables with one opening (2) in the housing (1') a joint penetration section for the stem of the impression tray (12) when moving the element (3) against the force of the spring (5) thus ensuring with the aid of the handle of the element (3) that the impression tray (12) is kept in place shocklessly.

2. Support as claimed in claim 1, characterized in that several openings (2) are laid out at the same level and with individually movable spring-mounted elements (3).

3. Support als claimed in claim 1 or 2, characterized by a covering cap (10) enclosing the inserted impression tray(s) (12).

**Revendications**

1. Support pour porte-empreinte dentaire avec couvercle (1'), qui montre au moins une ouverture (2) pour l'introduction de la queue d'un porte-empreinte (12), derrière laquelle - vu dans le sens de l'introduction - est placé un élément a ressort (3) qui, après l'introduction du porte-empreinte (12) dans l'ouverture (2), est ajustable à la queue du porte-empreinte (12) de sorte que cela effectue sur ce dernier un contre-poids, caractérisé par le fait que
   a) l'ouverture (2) est placée d'une manière horizontale dans le couvercle (1')
   b) l'élément (3) est placé dans le couvercle (1') pour une manipulation dans le sens vertical venant en contre-force d'un ressort (5),
   c) l'extrémité supérieure (6) du ressort (5) de l'élément (3) est placée de façon qu'elle se trouve hors du couvercle (1') et peut être actionnée, de même que
   d) l'élément (3) montre une ouverture (4) sur toute sa longueur qui, lors de l'actionnement de l'élément (3) par la contre force du ressort (5) libère, par une ouverture (2) dans le couvercle (1'), un plan transversal commun de pénétration pour la queue du porte-empreinte (12), de sorte qu'à l'aide de l'extrémité supérieure, destinée à actionner l'élément (3) une fixation du porte-empreinte éliminant tout risque de dommage est garantie.

2. Support selon la revendication 1, caractérisé par le fait que plusieurs ouvertures (2) sont placées à même hauteur et avec des éléments (3) pourvus de ressorts amovibles individuels.

3. Support selon la revendication 1 ou 2, caractérisé par une hotte de protection (10) protégeant le ou les porte-empreintes qui y ont été introduits.

Fig. 1

Fig. 2

Fig. 3

EP 0 235 717 B1